# EUROPEAN PATENT APPLICATION

(11) **EP 1 104 211 A2**
(43) Date of publication of application: **30.05.2001**
(21) Application number: 00310087.2
(22) Date of filing: 13.11.2000
(51) Int. Cl.: H04Q 7/34

(54) **Network enhancement by utilizing geolocation information**

(30) Priority: 24.11.1999 US 448933
(71) Applicant: LUCENT TECHNOLOGIES INC., Murray Hill, New Jersey 07974-0636 (US)
(72) Inventor: Chen, Byron H., Whippany, New Jersey 07981 (US); Chiang, Tung C., Berkeley Heights, New Jersey 07922 (US); Freidenfelds, John, Madison, New Jersey 07940 (US); Tekin, Ibrahim, Summit, Union, NJ 07901 (US)
(74) Representative: Buckley, Christopher Simon Thirsk

(57) **Abstract**

Network performance of a wireless network is enhanced by using geolocation information. The network enhancement may be achieved by determining call-dropping zones by the use geolocation information and by improving the signal quality in these call-dropping zones. The network enhancement may also be achieved in the form of increased capacity and reduced interference by utilizing geolocation information in beam steering and shaping of intelligent antennas. Rather than having antennas passively steering and shaping their beams in terms of the rays coming directly from mobiles or reflected by objects, geolocation information may be used to steer the beams (i.e., when antennas are adaptive) or select particular beams (i.e., when antennas are fixed-beam). In addition, the network enhancement may be achieved by using geolocation information in downtilt technology. The network enhancement may be further achieved by using geolocation information to reduce mobile registration requirements. The network enhancement may be also achieved by better managing the power level of a mobile. Additionally, the network enhancement may be achieved by enhancing load-balancing capabilities in a wireless system by the use of geolocation information.

## Description

### Field Of The Invention

The present invention relates to wireless communications systems.

### Cross-Reference To Related Applications

The subject matter of this application is related to U.S. patent application no. 09/251500 filed on February 17, 1999 as attorney docket no. Chen 5-4-5-1, the teachings of which are incorporated herein by reference.

### Description Of The Related Art

The proliferation of mobile units and their technology and usage has revealed various applications for the ability to locate mobile units. These applications include "911" calls, tourist and travel information, tracking of unauthorized cell phone usage and illegal activities, and locating of commercial and government vehicles, to name a few. Conventional wireless systems can determine only the nearest base station which at best may locate a mobile unit to within a radius of 3 to 10 miles. However, FCC regulations, as dictated in FCC Docket 94-102, require location accuracy of mobile units (e.g., cellular/PCS users) to within about 400 feet for E-911 service by October 1, 2001.

Therefore, a great deal of emphasis has been placed on developing systems that can determining the location of mobile units more accurately. One known method for locating mobile units is time difference of arrival (TDOA) which has been used for many years, at least in such applications as LORAN and GPS systems.

In Code Division Multiple Access (CDMA) systems, the time difference of arrival measurement is used to determine a hyperbola along which the mobile may be located. This is calculated by using the phase or chip offset of pilot signals received from two different base stations by a mobile terminal. A chip is a time period that corresponds to one bit time of the spreading code used to spectrally spread the pilots transmitted by the base station. An offset in the expected position of the spreading code results from the time delay from the transmitting base station to the mobile terminal and is measured in chips or bit periods of the spread up code. Using this information, the hyperbola is defined along which the mobile station may be located.

### Summary Of The Invention

A method and an apparatus for enhancing network performance of a wireless network by using generally available geolocation information are provided.

In a first embodiment, geolocation information is utilized to reduce call drop/loss rate. The call drop/loss rate is defined as the number of call failures versus the total number of established calls. In this embodiment, first, the geolocation information is utilized to determine call-dropping zones. Call-dropping zones are geographic clusters having a high rate of call drop/loss. Network enhancement is then achieved by improving the signal quality in these call-dropping zones.

In a second embodiment, geolocation information is utilized to assist in beam steering and shaping of intelligent antennas. The intelligent antennas are systems that use multiple configurable antennas or antenna arrays. In this embodiment, rather than having antennas passively steering and shaping their beams in terms of the rays coming directly from mobiles or reflected by objects, geolocation information is used to steer the beams (i.e., when antennas are adaptive) or select particular beams (i.e., when antennas are fixed-beam). This results in increased capacity and reduced interference.

In a third embodiment, in addition to intelligent antennas, geolocation information is used to deploy downtilt technology. In downtilt technology, antennas are dynamically steered to increase the capacity with no additional cell installation or sectorization. In accordance with the principles of the present invention, first, geolocation information is used to determine zones having most mobiles (i.e., having high call volumes) and then antennas are downtilted towards the zones having high call volumes, thereby reducing interference and increasing clarity.

In a fourth embodiment, geolocation information is used to reduce mobile registration. Generally, registration is the means by which a mobile informs a service provider of its presence in the system and its desire to receive service from that system. Each time the mobile moves from one cell-site to another, it must register or re-register with the new cell-site. This scheme becomes very inefficient, especially in a densely populated urban area, where a mobile may frequently moves between different cell-sites. In accordance with the principles of the present invention, the mobile registration process is improved by utilizing geolocation information. Geolocation information is used to track and predict the likely position of the mobile before the mobile enters a particular cell-site. Thus, re-registration is not required as long as the mobile stays within a service area of a particular master switching center. Thus, registration requirements are reduced.

In a fifth embodiment, geolocation information is used to manage the power level of a mobile. In cellular and personal communication systems, the power levels transmitted by every mobile are under constant control of the serving base station. The serving base station constantly monitors the strength of the signals from the mobile and if the signal strength falls below a pre-determined threshold level, the serving base station sends a power-up signal to the mobile. This scheme becomes very cumbersome in instances where signal strength changes rapidly because of some temporary obstructions, e.g., tunnels, bridges, large trees, big trucks, etc. Each time the signal strength falls below a pre-determined threshold level due to these obstructions, the serving base station sends a power-up signal to the mobile. Immediately after the obstruction is over, e.g., mobile is out of the tunnel, the power transmitted from the mobile is decreased. Thus, power control often fluctuates widely wherein power transmitted from the mobile is being constantly increased and decreased.

In the present invention, power control is managed better by adding geolocation information as input to the power control. For example, if the serving base station notes that the signal strength to a particular mobile has suffered a substantial loss (i.e., a 40-dB loss) and the geolocation information indicates that the mobile is moving at a 50 miles/hour rate, the transmitting power level is not increased because it is likely that signal strength will be regained after a brief period (e.g., a few milliseconds) as the mobile clears the obstruction. On the other hand, if geolocation information indicates that the mobile is stationary and has suffered a 40-dB loss, the mobile's transmitting power level is increased immediately to maintain a good quality connection.

In a sixth embodiment, geolocation information is used to enhance load-balancing capabilities in a wireless system. Currently, in a wireless system, load balancing is accomplished by monitoring the number of mobiles trying to access a particular base station and, if the base station seems overloaded, by transferring the mobiles having relatively weak signal strength to other base stations. This scheme doesn't account for the geographical location and velocity of the mobiles.

The dynamic load-balancing scheme of the present invention incorporates geolocation information in the decision-making of load balancing. In addition to measuring radio signal strength, the geographical location and the velocity of the moving mobiles are considered in the decision of which mobiles should be transferred. For example, assume both Mobile A and Mobile B are in a hand off zone and Mobile A is moving out of the cell at a fast speed and has a decreasing signal strength. Mobile B is moving into the cell and has an increasing signal strength. In accordance with the principles of the present invention, Mobile A will be handed off to the base station towards which the mobile is heading. Since Mobile B is moving into the cell, it will not be handed off.

The present invention and its above-described embodiments may be used in wireless networks to increase network performance. In one embodiment, the present invention is a method for enhancing network performance of a wireless network, comprising the steps of (a) determining a current location for a mobile in the wireless network; and (b) using the current location of the mobile to enhance network performance of the wireless network.

### Brief Description Of The Drawings

Other aspects, features, and advantages of the present invention will become more fully apparent from the following detailed description, the appended claims, and the accompanying drawings in which:
FIG. 1 illustrates the region of possible locations of a mobile determined by signal strength;
FIG. 2 illustrates the region of possible locations of a mobile determined by Time Difference of Arrival (TDOA);
FIG. 3 illustrates the region of possible locations of a mobile determined by Round Trip Delay (RTD);
FIG. 4 illustrates the points of possible locations of a mobile determined by RTD;
FIG. 5 illustrates the point, within the intersection of the regions, that maximizes total distance;
FIG. 6 illustrates the information of TDOA, Time of Arrival (TOA) and Angle of Arrival (AOA) and the estimated locations when 3 base stations are visible;
FIG. 7 depicts the information relevant to the estimation of a mobile's location in an exemplary CDMA system;
FIG. 8 illustrates a generic geolocation system that combines information from a plurality of sources including GPS information and wireless information;
FIG. 9 illustrates a block diagram of a network performance enhancement implementation in accordance with the principles of the present invention;
FIG. 10 illustrates a first network enhancement element termed call drop/loss diagnosis module; and
FIG. 11 illustrates an example where geolocation information is used to assist in the assignment of the fixed-beam antennas;
FIG. 12 illustrates an example where geolocation information may be used to assist adaptive beam antennas to form a customized beam; and
FIG. 13 illustrates an example where geolocation information may be used in dynamic load balancing and forced hand-off.

### Detailed Description

Location services are becoming more and more important in cellular systems and are used in applications such as emergency 911 calls and location-based billings. Location services rely on an accurate or an estimated position of a mobile within a wireless network.

There are different ways to determine geolocation information, i.e., the position of a mobile. A mobile transceiver (i.e., a mobile) communicating with one or more base station transceivers has multiple sources of information from which its geographical position may be estimated. For example, location information can be derived from (i) signal strength (ii) angle of arrival (AOA) of the signal; and (iii) time difference of arrival (TDOA) of the signal.

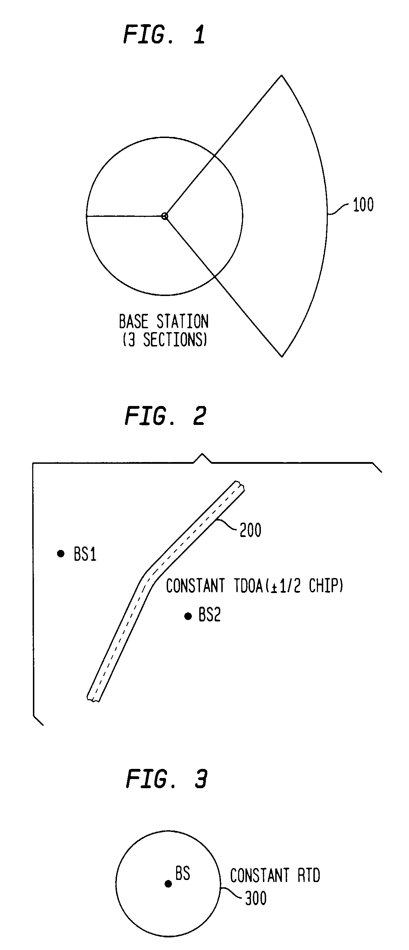

Due to practical limitations, the information available from a single source is generally noisy and incomplete. For example, signal strength may only be useful for determining the base station sector in which the receiving mobile is located (e.g., pie-shaped region 100 in FIG. 1). Similarly, absolute time may not be known, but only the difference in the time of arrival (TDOA) of signals from two base stations. See FIG. 2, in which region **200** represents the possible locations of a mobile that experiences a particular TDOA value, but with a limited precision. Of course, in some cases, the measurement may yield results that are more accurate. For example, the round trip delay (RTD) of a signal going from the base station to the mobile and then back to the base station may yield a region that can be reasonably approximated by the points on circle **300** of FIG. 3.

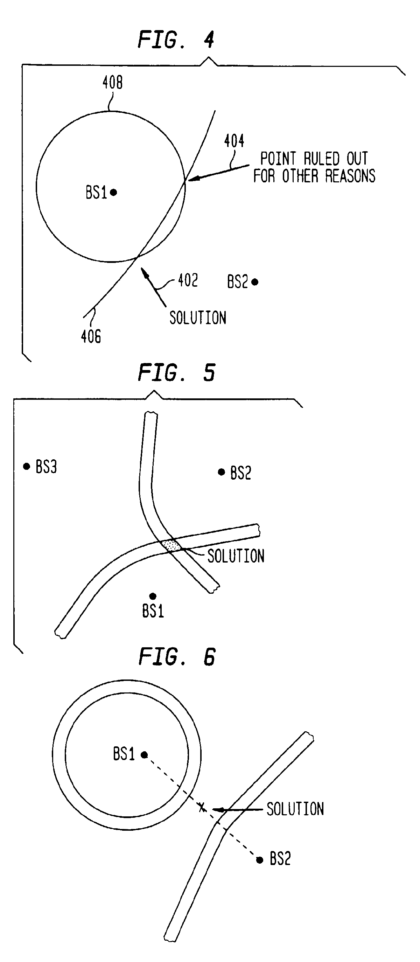

It may be advantageous to combine information from different sources. The general process is to find the point or points which are "most representative" of all of the relevant regions. In the simplest case, this may just be the points of intersection **402** of the two curves shown in FIG. 4, in which the region representing measured TDOA is taken to be a hyperbola **406**, and the region representing RTD is taken to be a circle **408**.

In a more complex situation, there may be multiple points that are within the intersection of regions (e.g., FIG. 5). The chosen point then might be the point whose total distance from the boundaries of the regions is maximized (i.e., the point that is most interior to the intersection of the regions). Or, there may be no points that are simultaneously in all of the regions (e.g., FIG. 6). In that case, the chosen point might be one that minimizes the total distance to all of the regions.

In the general case, the most representative point is calculated by a mathematical optimization. The optimization process may use "penalty functions" that increase for points farther from the relevant regions. The penalty functions are designed to guide the selection as much as possible toward the most salient points in all of the regions simultaneously. The optimization process may, for example, use different weights for the data from different regions to reflect quality of data, or known usefulness in predicting location.

It may also be advantageous to determine multiple points that are relevant to the estimation of the location. For example, a particular set of measurements might be equally indicative of two different locations (e.g., see the two possible solutions in FIG. 4). In that case, it may be more useful to generate both points as candidate locations, than to choose only one of them or to take some kind of average.

Although the methods described here are generally applied to estimating location from measurements, the same methods can be extended to incorporate other information from which location estimates may be derived. For example, if the mobile is known to be on a certain road, that road can be taken to be one of the relevant regions.

In a CDMA system, visibility means the number of base stations whose pilots are detectable by the mobile terminal. In CDMA system, TDOA, RTD, and AOA are measured and are available, and may be averaged over time to improve the accuracy of location estimates based on these measurements.

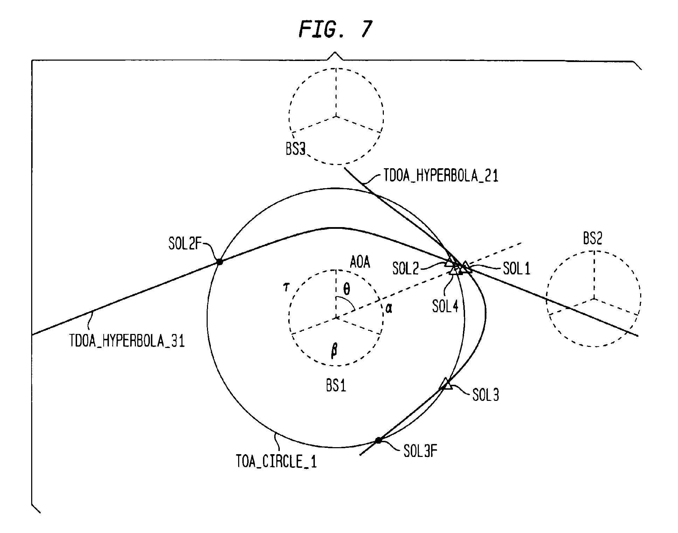

FIG. 7 depicts the information relevant to the estimation of a mobile's location in an exemplary CDMA system. This information is categorized as TDOA, TOA, and AOA. In CDMA systems, all this information may be obtained from RTD and PSMM messages which are available at the base station and/or mobile switching center. The contents of the RTD and PSMM are described below:
- RTD -: Contains the time stamp, the round trip delay (RTD) measurement and the ID of the primary serving sector, from which TOA (time of arrival) is derived.
- PSMM -: Contains the time stamp, pilot PN numbers, the pilot phases (or chip off-sets) that imply TDOA of pilots from other base stations versus the base station that contains the primary serving sector, and the pilot strengths from which AOA can be estimated.

It should be noted that PSMM does not always provide TDOA information. For instance, if a PSMM reports pilots that come from a single base station, there is no TDOA information available. Whether TDOA information is available depends on how many base stations are visible at a particular mobile.

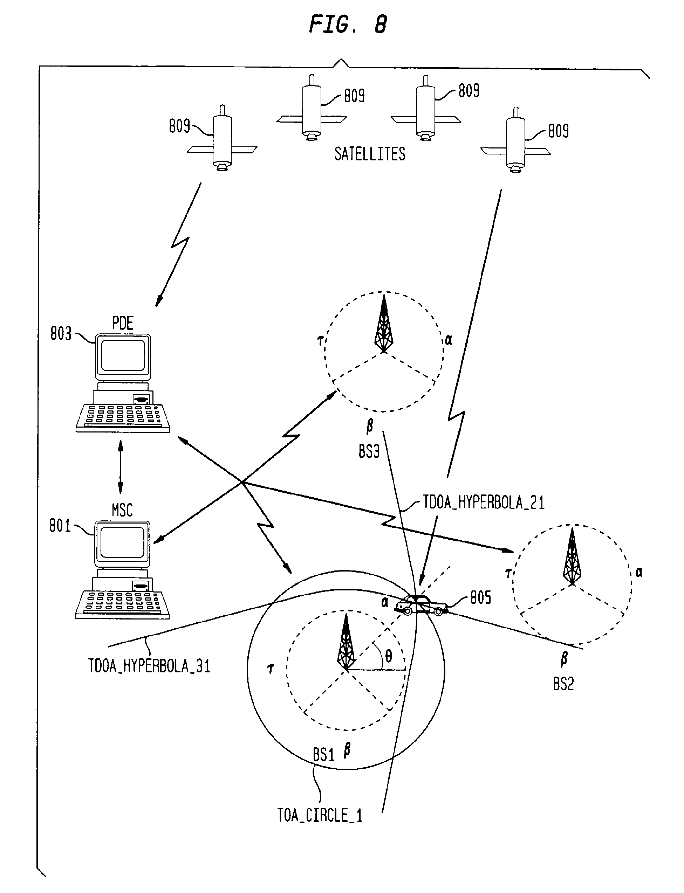

FIG. 8 illustrates a generic geolocation system that combines information from a plurality of sources including GPS information and wireless information. In FIG. 8, a mobile **805** is moving in an area that is covered by a wireless system comprising three base stations (BS1, BS2 and BS3), one master switching center (MSC) **801**, and one position determination entity (PDE) **803**. Each of the base stations has 3 sectors: α, β, and γ. The mobile is also equipped with a GPS receiver, which detects the GPS signals from three or more satellites **809**. The GPS information is combined with network information for determination of mobile position. This approach offers advantages over conventional means in terms of higher sensitivity, extensive coverage, shorter time to first fix (TTFF), lower power consumption, and robust performance.

Network information that is useful for mobile location is:
- The *TDOA_hyperbola_21* and *TDOA_hyperbola_31* obtained from the measurement of TDOA of signals from BS1, BS2, and BS3;
- The time of arrival circle *TOA_circle_1* obtained from a round trip delay measurement between BS1 and the mobile; and
- The *AOA* θ obtained from the ratios of strengths of pilot signals which are generally transmitted from BS 1, and recorded in the PSMM message.

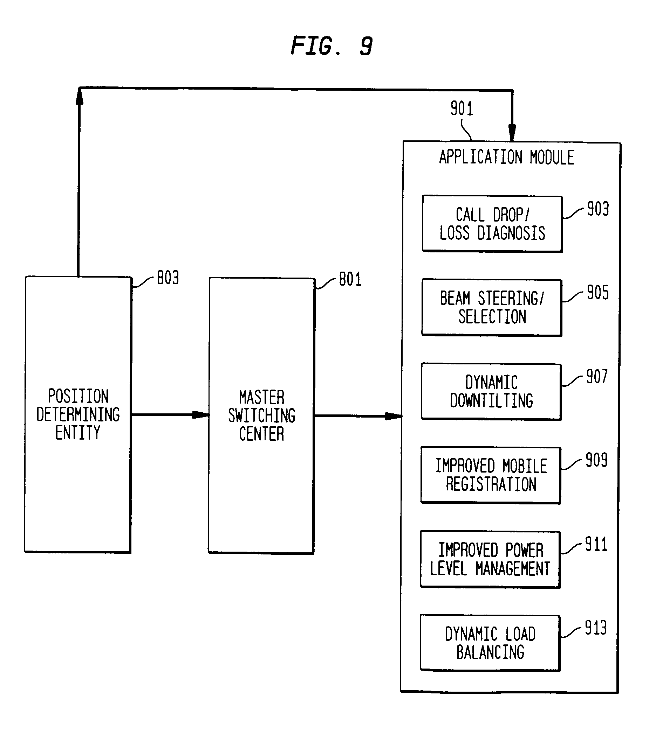

FIG. 9 illustrates a block diagram of a network performance enhancement implementation in accordance with one embodiment of the present invention. As shown in FIG. 9, this implementation **900** comprises: MSC **801**, PDE **803**, and application module **901**. Application module **901** contains multiple network enhancement elements **903-911** that may be operated simultaneously to improve network performance.

MSC **801** gathers general information about the wireless system. In general, the information is gathered from two sources: the mobile and the base stations. In a typical wireless system, the mobile reports back to the serving base station the round trip delay measurements in the downlink. The RTD measurement is used to calculate the distance between the mobile and the serving base station.

Directly coupled to MSC **801** is PDE **803** which computes the location of a mobile. PDE **803** may derive geolocation information from a plurality of sources. Also directly coupled to MSC **801** and PDE **803** is application module **901.** Application module **901** is configured to receive general information from MSC 801 and to receive geolocation information from PDE **803**. Application module **901** is further configured to utilize the general information and the geolocation information to enhance the network performance of the wireless network.

Application module **901** comprises one or more network enhancement elements **903-913.** Each network enhancement element may operate independently, with two or more network enhancement elements operating in parallel. Each network enhancement element utilizes the geolocation information to improve wireless network performance including call drop/loss rate, beam steering. adaptive antenna generation, downtilting and mobile registration..

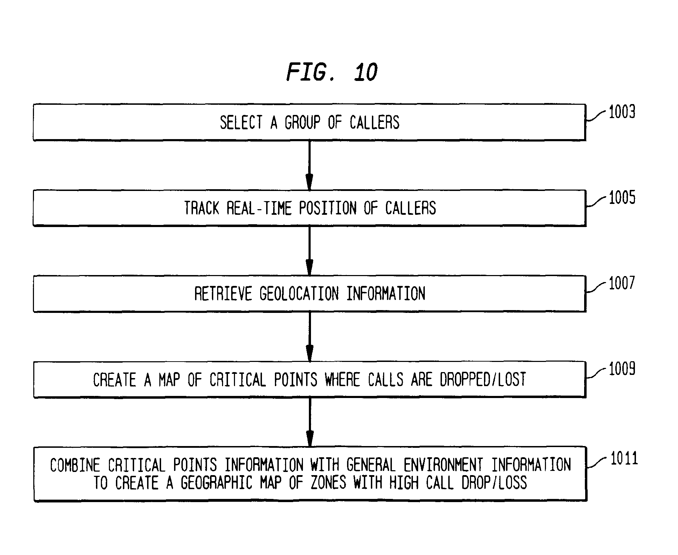

As illustrated in FIG. 10, in a first network enhancement element, termed call drop/loss diagnosis module **903**, the geographical position of the mobile and its moving trajectory calculated by PDE **803** are utilized for call drop/loss diagnosis. Call drop/loss is one of the most challenging problems for wireless systems. This problem is getting more and more attention from service providers because of its direct impact on revenue generation. High call drop/loss rates result in reduced customer satisfaction which can lead to reduced revenue.

A call may be dropped due to coverage problems, hand-off failures, access failures, or other reasons. In the present invention, the geolocation information from PDE **803** is used in differentiating geographic or environmental effects from system errors. For instance, a mobile may travel to a temporary obstruction such as under a highway bridge where it encounters very poor coverage and the call is dropped. In another instance, the mobile may travel around a corner in the urban environment where it is suddenly exposed to a new base station and the call is dropped. These examples correspond to different problems. The former case is due to intolerable frame error wherein the signal strength reached below a threshold level and the call is dropped. The latter case is a handoff problem wherein the mobile failed to receive a handoff burst or received the burst too late to direct the mobile for handoff.

In the present invention, the geolocation information is used in pinpointing the problem. For example, call drop/loss diagnosis module **903** may comprise diagnosis software that tracks call-dropping patterns. Initially, the diagnosis software selects a particular group of callers who are chosen as the first group of users who complained about call dropping (step **1003**). Then, the diagnosis software tracks the real-time position of those callers (step **1005**) by retrieving geolocation information from PDE **803** (step **1007**). The diagnosis software may also create a map of critical points where calls are frequently dropped (step **1009**). This critical point map may also integrate the general environment information, e.g., high-rise buildings, underground tunnels, highways, with the actual call-dropping points (step **1011**).

In a second embodiment, network enhancement module **905** receives the geographical position of the mobile from PDE **803** to assist in beam steering/selection of intelligent antennas. Intelligent antennas are defined as systems that use multiple antennas or antenna arrays with signal processing capabilities. Intelligent antennas are generally categorized into two types: fixed-beam and adaptive beam. In the case of fixed-beam antennas, geolocation information is used to assign a mobile to one of the available antennas based on the alignment of the beam directivity and the mobile's position. The assignment is made after considering a plurality of factors including availability of antennas, number of mobiles, and the geolocation information.

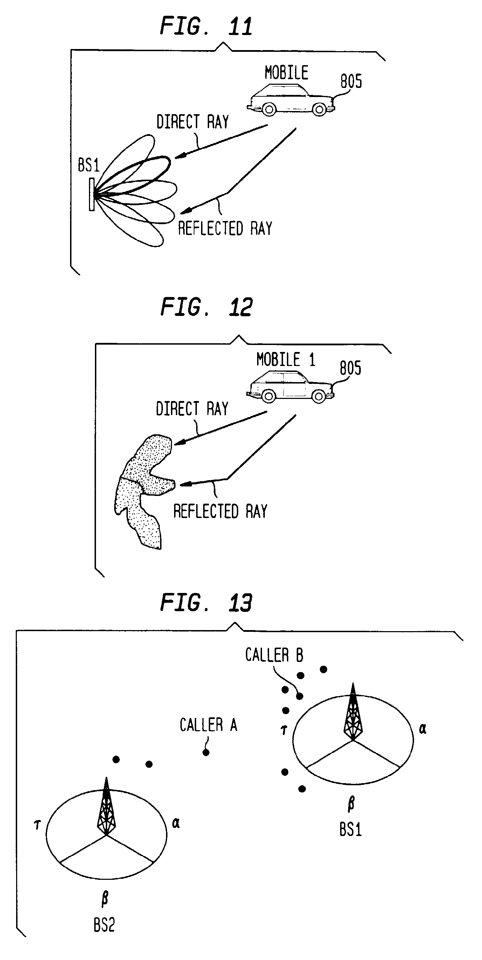

FIG. 11 illustrates an example where geolocation information is used to assist in the assignment of fixed-beam antennas. BS1 receives signals from mobile **805** along two signal rays along two signal paths. One ray comes directly from mobile **805** and is called line-of-sight (LOS). The second ray is reflected by some object and is indirectly received by the base station. In a wireless environment, the relative strength of these two rays can vary over time due to fading and shadowing. Consequently, the selection of a particular fixed-beam antenna to serve mobile **803** becomes difficult.

In present invention, geolocation information is used to select an appropriate fixed-beam antenna. Geolocation-assisted fixed-beam antennas are more advantageous in TDMA systems and analog systems where the multipath components, such as the reflected ray in FIG. 11, are ignored at the received.

In CDMA systems, although existing RAKE receivers combine multipath components to improve the overall signal strength, geolocation information is still useful in selecting a beam pointing directly to mobile **805**. Network enhancement element **905** may further improve the quality of signals, especially signals with marginal or impaired quality, by adjusting the orientation of the sector antennas, and/or tuning the antenna beam width.

Similarly, geolocation information may be used to assist adaptive-beam antennas to form a customized beam pointing towards the mobile to maximize the efficiency and minimize the interference. In this case, as illustrated in FIG. 12, first, geolocation information is used to determine current needs of mobile **805** and to predict future needs of mobile **805.** A customized beam is then created which suits the needs of mobile **805.**

In a third embodiment, antennas provide "dynamic downtilting." In this embodiment, a network enhancement element **907** utilizes geolocation information to know the layout of cell sites and zones of heavy traffic (i.e., where a large number of mobiles are located). The antennas are then downtilted in the direction of heavy traffic zones. "Downtilting" techniques and mechanisms are well known in the art. Consequently, the interference is reduced and the overall capacity is increased.

Dynamic downtilt is particularly useful for CDMA systems because adjacent cells are using the same frequency band. By "downtilting" the antenna towards one cell/sector, the interference is reduced and capacity is increased.

In a fourth embodiment, network enhancement element **909** provides a method for improving mobile registration by utilizing geolocation information. Registration is the means by which a mobile informs a service provider of its presence in the system and its desire to receive service from that system. Traditionally, wireless systems utilize timer-based registration wherein a mobile registers every few milliseconds or upon expiration of each pre-determined time period when a mobile is in a roaming status. This registration requirement is very inefficient.

In network enhancement element **909**, the mobile registration process is improved by incorporating geolocation information received from PDE **803** in the decision making. Geolocation information from PDE **803** is utilized to determine the current position of mobile **805** as well as to predict the future position of the mobile. MSC **801** utilizes the current position information and the future position information for the delivery or handoff of the calls. Therefore, in accordance with present invention, there is no need to re-register as long as mobile **805** remains within the coverage of MSC **801**.

This improved registration technique results in cost savings, especially when mobile **805** is moving in a densely populated urban area where frequent location registration is required. Network enhancement element **907** may also be deployed in a paging network wherein geolocation information may be used to predict a likely position of the mobile. Thereon, the paging call may be sent to a small cluster of base stations and the loading of the paging network may be reduced.

In a fifth embodiment, network enhancement element **911** uses geolocation information to better manage power levels of mobiles. In cellular and personal communication systems, the power levels transmitted by each mobile are under constant control by the serving base station. The serving base station constantly monitors the signal strength of each mobile and if the signal strength falls below a pre-determined threshold level, the serving base station sends a control signal to increase the power from the particular mobile and signal strength is improved. Also, if signal strength exceeds a pre-determined threshold level, the power from the mobile is decreased. This scheme becomes very cumbersome in instances where signal strength changes rapidly because of some temporary obstructions, e.g., tunnels, bridges, large trees, big trucks, etc. Each time the signal strength falls below a pre-determined threshold level due to these obstructions, the serving base station decides to increase the power transmitted from the mobile. Immediately after the obstruction is over, e.g., mobile is out of the tunnel, the power from the mobile is decreased. Thus, power control takes a wild ride wherein power to the mobile is being constantly increased and decreased.

In the present invention, network enhancement element **911** utilizes geolocation information received from PDE **803** before making its decision to increase or decrease the mobile's power. Network enhancement element **911** receives the geolocation information and creates a lookup table by combining the statistics of the power level versus the system load in conjunction with the location of a mobile. This lookup table may include information on temporary obstructions or other particular geographic zones surroundings each base station.

When the primary base station notices a sudden drop in the signal strength, it communicates this information to network enhancement element **911**. Network enhancement element **911** then evaluates the power level versus system load in conjunction with the location of mobile **805** and makes an intelligent decision based on the statistical information stored in the look-up table. For instance, if the signal in the reversed link suffered a substantial loss (e.g., a 40-dB loss) and the geolocation information indicates that the mobile is moving at 50 miles/hour in a wireless network, there may be no need to adjust the transmitting power level because the deep fadings are about 100 ms apart and may last for only several milliseconds. On the other hand, if it is known from the geolocation information that the mobile is stationary and the signal loss is 40 dB, a power-up command may be sent from the base station to the mobile to maintain a good quality connection.

In a sixth embodiment, network enhancement module **913** uses the geolocation information to enhance dynamic load balancing capabilities within a wireless network. In prior art, load balancing is achieved by channel allocation. In prior art, channel allocation may be based on a fixed channel allocation approach or a dynamic channel allocation approach. In the fixed channel allocation approach, each cell is been allocated with a fixed set of channels to achieve spatial efficiency. If all the channels in a cell are occupied, a new call is blocked and the subscriber does not receive service. In the dynamic channel allocation approach, all the channels are available to the cells in a cluster. In this approach, the channel allocation is based on a "first come, first served" basis.

In accordance with the principles of the present invention, geolocation information is used to gain knowledge on how many mobiles are in a certain area, and how the callers are geographically distributed within cells. Only then are the channels dynamically allocated in accordance with the traffic patterns. This results in spatial efficiency.

In accordance with the sixth embodiment, geolocation information is used in forced handoff procedures. Forced handoff involves transferring to a base station with lower received signal power level a mobile from one base station to another. In prior art, if a particular base station seems overloaded, the mobiles having weak signal strength are transferred out of the particular base station to a new base station. However, this approach is generally inefficient.

For instance, as illustrated in FIG. 13, BS1 and BS2 are base stations each serving a group of mobiles. Mobile A is located in the area covered by both BS1 and BS2. Mobile B, located in the area covered by BS 1, then requires service. But BS1 is unable to accept new users due to current load. In the prior art, the mobiles are handed off based on signal strength, because the locations of the mobiles are not known. In the present invention, geolocation information from PDE **803** is used to make hand-off decisions (e.g., in FIG. 13, hand-off caller A to BS2 and then accept caller B at BS1. The geographic distribution of callers with respect to cells is used to redistribute the load among base stations.

The above-described embodiments are only few exemplary embodiments illustrating how geolocation information may be utilized in the network enhancement of wireless networks. These wireless networks include TDMA-based systems and CDMA-based systems. The principles of the present invention are flexible and, in the future as geolocation information becomes more accessible, this information may be utilized in third-generation wireless networks.

It will be further understood that various changes in the details, materials, and arrangements of the parts which have been described and illustrated in order to explain the nature of this invention may be made by those skilled in the art without departing from the scope of the invention as expressed in the following claims.

## Claims

1. A method for enhancing network performance of a wireless network, comprising the steps of:
(a) determining a current location for a mobile in the wireless network; and
(b) using the current location of the mobile to enhance network performance of the wireless network.

2. The invention of claim 1, wherein step (a) comprises the steps of:
determining current locations of a plurality of mobiles over a pre-determined time period; and
wherein step (b) comprises the steps of:
identifying one or more areas of high call-dropping rates based upon the current locations.

3. The invention of claim 1, wherein step (b) comprises the step of selecting a suitable fixed antenna for transmitting or receiving to or from the mobile from a plurality of available fixed antennas based on the current location of the mobile.

4. The invention of claim 1, wherein step (b) comprises the step of adaptively generating a customized beam for the mobile based on the current location of the mobile.

5. The invention of claim 1, wherein step (a) comprises the steps of:
determining current locations of a plurality of mobiles over a pre-determined time period; and wherein step (b) comprises the step of:
modifying the downtilt angle of one or more base station antennas based on the current locations of the mobiles.

6. The invention of claim 5, further comprising the steps of:
(i) identifying zones of heavy traffic based upon the current locations of the mobile; and
(ii) modifying the downtilt angle of one or more base station antennas based on the identity of heavy traffic zones.

7. The invention of claim 1, wherein step (a) comprises the steps of:
determining current locations of a plurality of mobiles over a pre-determined time period; and wherein step (b) comprises the steps of:
requiring re-registration only if the mobile will be moving out of the coverage of the serving master switching center.

8. The invention of claim 7, further comprising the steps of:
(i) predicting a future location of the mobile based upon the current location and previous location of the mobile; and
(ii) determining re-registration requirements based on the current and previous locations of the mobile.

9. The invention of claim 1, wherein step (b) comprises the steps of:
(i) estimating a future location of the mobile based upon the current location and previous location of the mobile; and
(ii) deciding whether to transmit a power-level up signal based on the estimated future location of the mobile.

10. The invention of claim 9, further comprising the steps of:
(i) determining if signal strength of the mobile has fallen below a predetermined level;
(ii) estimating a future location of the mobile based upon the current location and previous location of the mobile; and
(iii) deciding whether to transmit a power-level up signal based on the signal strength and estimated future location of the mobile.

11. The invention of claim 1, wherein step (b) comprises the steps of:
(i) estimating a future location of the mobile based upon the current location and previous location of the mobile; and
(ii) deciding whether to transmit a power-level down signal based on the estimated future location of the mobile.

12. The invention of claim 11, further comprising the steps of:
(i) determining if signal strength of the mobile has exceeded a predetermined level;
(ii) estimating a future location of the mobile based upon the current location and previous location of the mobile; and
(iii) deciding whether to transmit a power-level down signal based on the signal strength and estimated future location of the mobile.

13. The invention of claim 1, wherein step (a) comprises the steps of: (i) determining current locations of a plurality of mobiles over a pre-determined time period; and wherein step (b) comprises the step of selecting mobiles for forced hand-off based upon the current locations of the mobiles.

14. The invention of claim 1, wherein step (a) comprises the steps of: (i) determining future locations of a plurality of mobiles over a pre-determined time period; and wherein step (b) comprises the step of selecting mobiles for forced hand-off based upon the future locations of the mobiles.
